# EUROPÄISCHE PATENTSCHRIFT

(11) **EP 2 491 236 B1**
(45) Veröffentlichungstag und Bekanntmachung des Hinweises auf die Patenterteilung: **01.02.2017**
(21) Anmeldenummer: 10768698.2
(22) Anmeldetag: 19.10.2010
(51) Int. Cl.: F02D 41/06, F02D 41/14, F02B 75/22, F02D 41/22

(54) **VERFAHREN ZUR STEUERUNG UND REGELUNG EINER BRENNKRAFTMASCHINE**
METHOD FOR THE OPEN-LOOP CONTROL AND CLOSED-LOOP CONTROL OF AN INTERNAL COMBUSTION ENGINE
PROCÉDÉ DE COMMANDE ET DE RÉGULATION D'UN MOTEUR À COMBUSTION INTERNE

(30) Priorität: 23.10.2009 DE 102009050469
(43) Veröffentlichungstag der Anmeldung: 29.08.2012
(73) Patentinhaber: MTU Friedrichshafen GmbH, 88045 Friedrichshafen (DE)
(72) Erfinder: DÖLKER, Armin, 88048 Friedrichshafen (DE)
(74) Vertreter: Winter, Josef
(86) Internationale Anmeldenummer: PCT/EP2010/006383
(87) Internationale Veröffentlichungsnummer: WO 2011/047834

(56) Entgegenhaltungen:
- WO-A1-03/046357
- DE-A1-102007 000 742
- DE-A1-102007 034 317
- DE-B3-102006 040 441

## Beschreibung

Die Erfindung betrifft ein Verfahren zur Steuerung und Regelung einer Brennkraftmaschine, bei dem ein A-seitiger Raildruck unabhängig vom B-seitigen Raildruck geregelt wird.

Bei einer Brennkraftmaschine mit Common-Railsystem wird die Güte der Verbrennung maßgeblich über das Druckniveau im Rail bestimmt. Zur Einhaltung der gesetzlichen Emissionsgrenzwerte wird daher der Raildruck geregelt. Typischerweise umfasst ein Raildruck-Regelkreis eine Vergleichsstelle zur Bestimmung einer Regelabweichung, einen Druckregler zum Berechnen eines Stellsignals, die Regelstrecke und ein Softwarefilter zur Berechnung des Ist-Raildrucks im Rückkopplungszweig. Die Regelabweichung wiederum berechnet sich aus der Differenz von Soll- zu Ist-Raildruck. Die Regelstrecke umfasst das Druckstellglied, das Rail und die Injektoren zum Einspritzen des Kraftstoffs in die Brennräume der Brennkraftmaschine.

Aus der DE 10 2006 040 441 B3 ist ein Common-Railsystem mit Druckregelung bekannt, bei dem der Druckregler über das Stellsignal auf eine Saugdrossel zugreift. Über die Saugdrossel wird der Zulaufquerschnitt zur Hochdruckpumpe und damit das geförderte Kraftstoffvolumen festgelegt. Angesteuert wird die Saugdrossel in negativer Logik, das heißt, diese ist bei einem Stromwert von null Ampère vollständig geöffnet. Als Schutzmaßnahme vor einem zu hohen Raildruck, zum Beispiel nach einem Kabelbruch in der Stromzuführung zur Saugdrossel, ist ein passives-Druckbegrenzungsventil vorgesehen. Überschreitet der Raildruck einen kritischen Wert, zum Beispiel 2400 bar, so öffnet das Druckbegrenzungsventil. Über das geöffnete Druckbegrenzungsventil wird dann der Kraftstoff aus dem Rail in den Kraftstofftank abgeleitet. Bei geöffnetem Druckbegrenzungsventil stellt sich im Rail ein Druckniveau ein, welches von der Einspritzmenge und der Motordrehzahl abhängt. Bei Leerlauf beträgt dieses Druckniveau ca. 900 bar, während es bei Volllast ca. 700 bar beträgt.

Aus der DE 10 2007 034 317 A1 ist eine Brennkraftmaschine mit einem A-seitigen und einem B-seitigen Common-Railsystem bekannt, welche identisch aufgebaut sind. Die beiden Common-Railsysteme sind hydraulisch voneinander entkoppelt und erlauben daher eine unabhängige Regelung des A-seitigen sowie B-seitigen Raildrucks. Über die getrennte Regelung werden die Druckschwankungen in den Rails verringert. Eine korrekte Raildruck-Regelung setzt einen fehlerfrei arbeitenden Rail-Drucksensor voraus. Der Ausfall eines Rail-Drucksensors oder beider Rail-Drucksensoren verursacht bei dem angegebenen System einen nicht definierten Zustand der Druckregelung und kann einen kritischen Zustand der Brennkraftmaschine bewirken, da keine Fehlerabsicherung aufgezeigt ist.

Ausgehend von einem Common-Railsystem mit einem passiven Druckbegrenzungsventil und einer eigenständigen Raildruck-Regelung sowohl auf der A-Seite als auch der B-Seite, liegt der Erfindung die Aufgabe zugrunde, nach Ausfall des Rail-Drucksensors einen sicheren Motorbetrieb zu gewährleisten.

Gelöst wird diese Aufgabe durch ein Verfahren zur Steuerung und Regelung einer Brennkraftmaschine mit den Merkmalen von Anspruch 1. Die Ausgestaltungen sind in den Unteransprüchen dargestellt.

Das Verfahren besteht darin, dass derjenige Raildruck weiterhin geregelt wird, welcher fehlerfrei sensiert werden kann, während der nicht mehr erfassbare Raildruck im Notbetrieb gesteuert wird. Wird zum Beispiel ein defekter A-seitiger Rail-Drucksensor erkannt, so wird in einen A-seitigen Notbetrieb gewechselt, bei dem der A-seitige Raildruck gesteuert wird, während der B-seitige Raildruck weiterhin geregelt wird. Ist hingegen der B-seitige Rail-Drucksensor defekt, so wird in einen B-seitigen Notbetrieb gewechselt, bei dem der B-seitige Raildruck gesteuert wird, während der A-seitige Raildruck weiterhin geregelt wird. Bei erkanntem Doppelfehler, es sind also beide Rail-Drucksensoren defekt, wird in den A-seitigen und in den B-seitigen Notbetrieb gewechselt.

Im A-seitigen Notbetrieb wird der A-seitige Raildruck sukzessive so lange erhöht bis das A-seitige passive Druckbegrenzungsventil anspricht, wodurch dann Kraftstoff aus dem A-seitigen Rail in den Kraftstofftank abgesteuert wird. Bei geöffnetem A-seitigen Druckbegrenzungsventil stellt sich dann im A-seitigen Rail ein Raildruck im Bereich von 700 bar (Volllast) bis 900 bar (Leerlauf) ein. Im B-seitigen Notbetrieb wird in analoger Weise vorgegangen. Ein sicherer Motorbetrieb wird also dadurch erreicht, dass über das bewusst herbeigeführte öffnen des Druckbegrenzungsventils ein definierter Zustand eingestellt wird. Da bei einem Einfachfehler der Raildruck des fehlerfreien Rails weiterhin geregelt wird, wird dieses bei bestmöglichen Emissionswerten betrieben und gestattet den Weiterbetrieb der Brennkraftmaschine mit vergleichsweise hoher Leistung. Bei einem Doppelfehler kann die Brennkraftmaschine bei reduzierter Leistungsabgabe weiter betrieben werden.

Die sukzessive Druckerhöhung im Notbetrieb wird dadurch erreicht, dass die niederdruckseitige Saugdrossel als Druckstellglied in Öffnungsrichtung beaufschlagt wird. Beispielsweise indem ein Soll-Strom oder ein PWM-Signal als Ansteuersignal der Saugdrossel auf einen entsprechenden Notbetriebswert gesetzt wird. Bei einer stromlos offenen Saugdrossel wird als Notbetriebsstromwert zum Beispiel null Ampère gesetzt. Ein Öffnen des passiven Druckbegrenzungsventils kann auch erreicht werden, wenn ein Notbetriebsstromwert größer Null eingestellt wird, z. B. 0.4 Ampère. Dadurch kann die Erwärmung des Kraftstoffs verringert werden.

Im Normalbetrieb wird die Bestromungsdauer der Injektoren über ein Injektorkennfeld in Abhängigkeit einer Soll-Einspritzmenge und des jeweiligen Ist-Raildrucks berechnet. Soll ein A-seitiger Injektor angesteuert werden, so ist dies der A-seitige Ist-Raildruck. Soll ein B-seitiger Injektor angesteuert werden, so ist dies der B-seitige Ist-Raildruck. Die Umschaltung vom A-seitigen Ist-Raildruck auf den B-seitigen Ist-Raildruck erfolgt in Abhängigkeit der Zündfolge. Ein defekter Rail-Drucksensor verursacht daher eine fehlerhafte Bestromungsdauer. Die Erfindung sieht nun vor, dass im A-seitigen Notbetrieb -anstelle des A-seitigen Ist-Raildrucks ein-Raildruck-Mittelwert-ats Eingangsgröße des Injektorkennfelds gesetzt wird. Zweckmäßigerweise wird der Raildruck-Mittelwert entsprechend dem oben genannten Druckbereich auf 800 bar festgesetzt. Fällt der B-seitige Rail-Drucksensor aus, so wird anstelle des B-seitigen Ist-Raildrucks ebenfalls der Raildruck-Mittelwert gesetzt. Bei einem Doppelfehler wird die Bestromungsdauer in Abhängigkeit der Soll-Einspritzmenge und des Raildruck-Mittelwerts unabhängig von der Zündfolge berechnet. Der Vorteil dieser Vorgehensweise besteht darin, dass selbst nach Ausfall eines oder beider Rail-Drucksensoren die Bestromungsdauer der Injektoren noch mit hinreichender Genauigkeit bestimmt werden kann.

In den Figuren ist ein bevorzugtes Ausführungsbeispiel dargestellt. Es zeigen:
- Figur 1: ein Systemschaubild,
- Figur 2: den A-seitigen Raildruck-Regelkreis mit Notbetriebsfunktion,
- Figur 3: ein Blockschaltbild,
- Figur 4: ein Zeitdiagramm,
- Figur 5: einen ersten Programm-Ablaufplan und
- Figur 6: einen zweiten Programm-Ablaufplan.

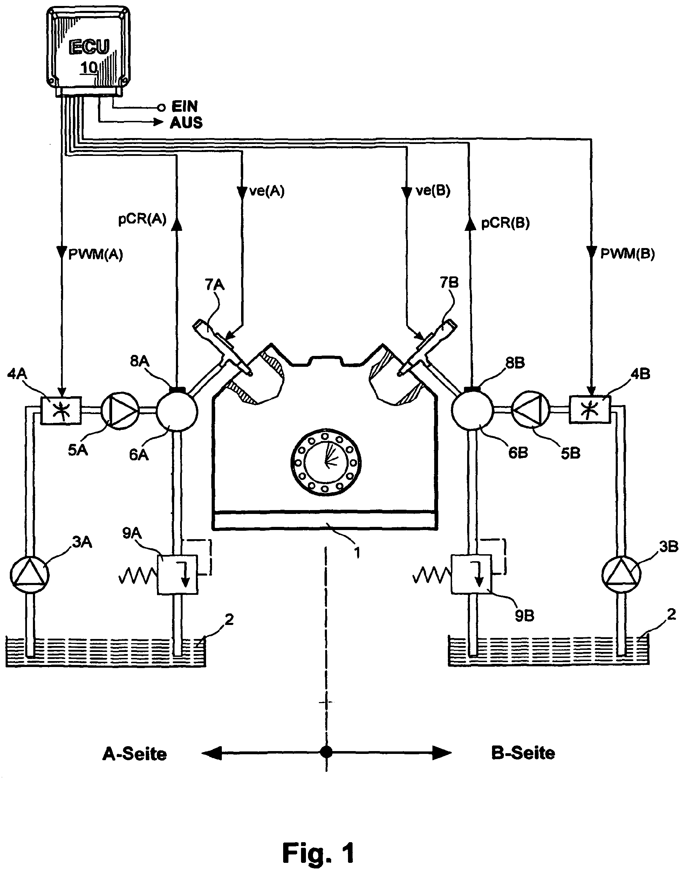

Die Figur 1 zeigt ein Systemschaubild einer elektronisch gesteuerten Brennkraftmaschine 1 in V-Anordnung mit einem Common-Railsystem auf der A-Seite und einem Common-Railsystem auf der B-Seite. Das A-seitige und das B-seitige Common-Railsystem sind identisch aufgebaut. In der weiteren Beschreibung sind die Komponenten der A-Seite bei den Bezugszeichen mit dem Zusatz A gekennzeichnet und die Komponenten der B-Seite bei den Bezugszeichen mit dem Zusatz B gekennzeichnet.

Das Common-Railsystem auf der A-Seite umfasst als mechanische Komponenten eine Niederdruckpumpe 3A zur Förderung von Kraftstoff aus einem Kraftstofftank 2, eine Saugdrossel 4A zur Beeinflussung des Volumenstroms, eine Hochdruckpumpe 5A, ein Rail 6A und Injektoren 7A zum Einspritzen von Kraftstoff in die Brennräume der Brennkraftmaschine 1. Optional kann das Common-Railsystem auch mit Einzelspeichern ausgeführt sein, wobei dann zum Beispiel im Injektor 7A ein Einzelspeicher als zusätzliches Puffervolumen integriert ist. Als Schutz vor einem unzulässig hohen Druckniveau im Rail 6A ist ein passives Druckbegrenzungsventil 9A vorgesehen, welches zum Beispiel bei einem Raildruck von 2400 bar öffnet und im geöffneten Zustand den Kraftstoff aus dem Rail 6A in den Kraftstofftank 2 absteuert.

Gesteuert wird die Brennkraftmaschine 1 über ein elektronisches Motorsteuergerät 10 (ECU), welches die üblichen Bestandteile eines Mikrocomputersystems, beispielsweise einen Mikroprozessor, I/O-Bausteine, Puffer und Speicherbausteine (EEPROM, RAM) beinhaltet. In den Speicherbausteinen sind die für den Betrieb der Brennkraftmaschine 1 relevanten Betriebsdaten in Kennfeldern/Kennlinien appliziert. Über diese berechnet das elektronische Steuergerät 10 aus den Eingangsgrößen die Ausgangsgrößen. In der Figur 1 sind als Eingangsgrößen des elektronischen Motorsteuergeräts 10 exemplarisch ein A-seitiger Raildruck pCR(A), ein B-seitiger Raildruck pCR(B) und eine Größe EIN dargestellt. Der A-seitige Raildruck pCR(A) wird durch einen A-seitigen Rail-Drucksensor 8A und der B-seitige Raildruck pCR(B) durch einen B-seitigen Rail-Drucksensor 8B erfasst. Die Größe EIN steht stellvertretend für die weiteren Eingangssignale, beispielsweise für eine Motordrehzahl oder für einen Leistungswunsch des Bedieners. Die dargestellten Ausgangsgrößen des elektronischen Motorsteuergeräts 10 sind ein PWM-Signal PWM(A) zur Ansteuerung der A-seitigen Saugdrossel 4A, ein leistungsbestimmendes Signal ve(A) zur Ansteuerung der A-seitigen Injektoren 7A, ein PWM-Signal PWM(B) zur Ansteuerung der B-seitigen Saugdrossel 4B, ein leistungsbestimmendes Signal ve(B) zur Ansteuerung der B-seitigen Injektoren 7B und eine Größe AUS. Letztere steht stellvertretend für die weiteren Stellsignale zur Steuerung der Brennkraftmaschine 1, beispielsweise ein Stellsignal zur Ansteuerung eines AGR-Ventils. Kennzeichnendes Merkmal der dargestellten Ausführungsform ist die voneinander unabhängige Regelung des A-seitigen Raildrucks pCR(A) vom B-seitigen Raildruck pCR(B).

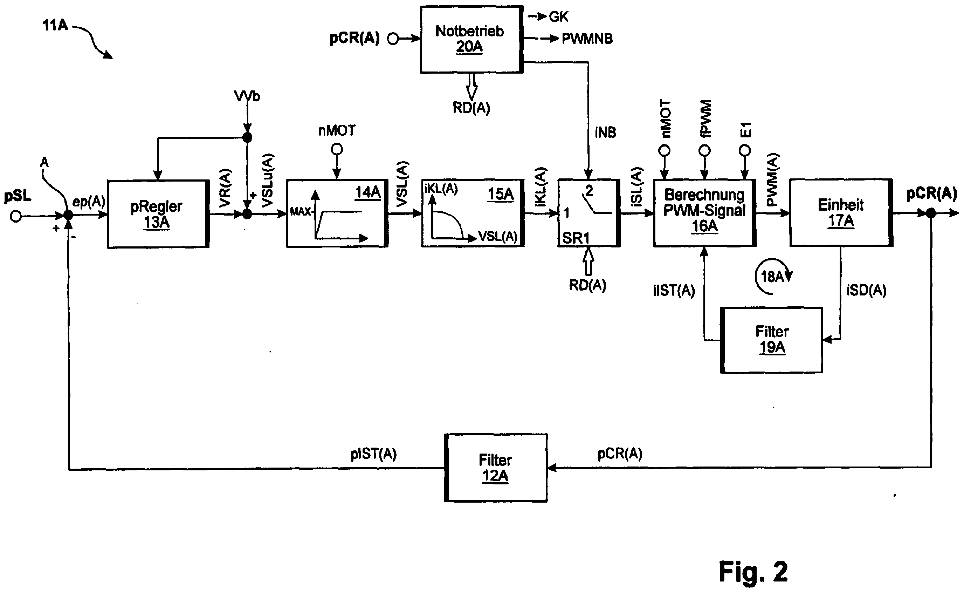

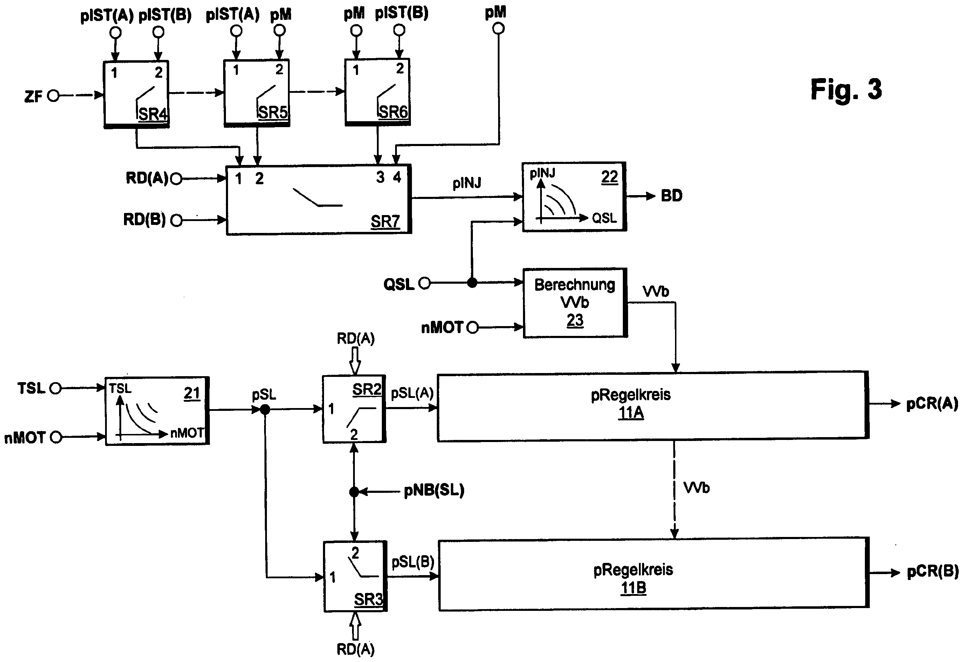

Die Figur 2 zeigt den A-seitigen Raildruck-Regelkreis 11A zur Regelung des A-seitigen Raildrucks pCR(A) mit einer Notbetriebsfunktion. Da der A-seitige Raildruck-Regelkreis und der B-seitige Raildruck-Regelkreis identisch aufgebaut sind, gilt die Beschreibung der Figur 2 auch für den B-seitigen Raildruck-Regelkreis. Die Eingangsgrößen des A-seitigen Raildruck-Regelkreises 11A sind: ein Soll-Raildruck pSL, ein Soll-Verbrauch VVb, die Motordrehzahl nMOT, ein Signal RD(A), ein Notbetriebsstromwert iNB, eine PWM-Grundfrequenz fPWM und eine Größe E1. Unter der Größe E1 sind die Batteriespannung und der ohmsche Widerstand der Saugdrosselspule-mit-Zuleitung zusammengefasst, welche in die Berechnung des PWM-Signals mit eingehen. Das Signal RD(A) kennzeichnet einen defekten A-seitigen Rail-Drucksensor. Die Ausgangsgröße des A-seitigen Raildruck-Regelkreises 11A ist der Rohwert des A-seitigen Raildrucks pCR(A). Aus dem Rohwert des Raildrucks pCR(A) wird mittels eines Filters 12A der Ist-Raildruck pIST(A) berechnet. Dieser wird dann mit dem Soll-Raildruck pSL an einem Summationspunkt A verglichen, woraus eine Regelabweichung ep(A) resultiert. Aus der Regelabweichung ep(A) berechnet ein Druckregler 13A seine Stellgröße, welche einem Regler-Volumenstrom VR(A) mit der physikalischen Einheit Liter/Minute entspricht. Zum Regler-Volumenstrom VR(A) wird an einem Summationspunkt der berechnete Soll-Verbrauch VVb addiert. Berechnet wird der Soll-Verbrauch VVb in Abhängigkeit einer Soll-Einspritzmenge und der Motordrehzahl (Fig. 3). Das Ergebnis der Addition entspricht einem unbegrenzten A-seitigen Soll-Volumenstrom VSLu(A), welcher über eine Begrenzung 14A in Abhängigkeit der Motordrehzahl nMOT limitiert wird. Die Ausgangsgröße der Begrenzung 14A entspricht einem Soll-Volumenstrom VSL(A), der die Eingangsgröße einer Pumpen-Kennlinie 15A ist. Über die Pumpen-Kennlinie 15A wird dem Soll-Volumenstrom VSL(A) ein elektrischer Strom iKL(A) zugeordnet. Die Pumpen-Kennlinie 15A ist in der Form ausgeführt, dass einem zunehmenden Soll-Volumenstrom VSL(A) ein abnehmender Strom iKL(A) zugeordnet wird. Im Normalbetrieb ist der Schalter SR1 in der Stellung 1, sodass der Soll-Strom iSL(A) dem über die Pumpen-Kennlinie 15A berechneten Strom iKL(A) entspricht. Der Soll-Strom iSL(A) ist eine Eingangsgröße der Berechnung PWM-Signal 16A. Über die Berechnung 16A wird in Abhängigkeit des Soll-Stroms iSL(A) ein PWM-Signal PWM(A) berechnet, mit welchem dann die Magnetspule der A-seitigen Saugdrossel angesteuert wird. Dadurch wird der Weg des Magnetkerns verändert, wodurch der Förderstrom der A-seitigen Hochdruckpumpe frei beeinflusst wird. Aus Sicherheitsgründen ist die A-seitige Saugdrossel stromlos offen und wird mit zunehmendem PWM-Wert in Richtung der Schließstellung beaufschlagt. Die A-seitige Saugdrossel und die A-seitige Hochdruckpumpe sind in der Einheit 17A zusammengefasst. Der Ansteuerung der A-seitigen Saugdrossel kann ein Strom-Regelkreis 18A unterlagert sein, bei welchem der Saugdrosselstrom iSD(A) als Regelgröße erfasst, über ein Filter 19A gefiltert und als Ist-Strom iIST(A) auf die Berechnung 16A zurückgekoppelt wird. Der von der Hochdruckpumpe im A-seitigen Rail erzeugte A-seitige Raildruck pCR(A) wird dann über den A-seitigen Rail-Drucksensor erfasst. Damit ist der A-seitige Raildruck-Regelkreis geschlossen.

Ergänzt wird der A-seitige Raildruck-Regelkreis durch einen Funktionsblock Notbetrieb 20A. Dessen Eingangsgröße ist der A-seitige Raildruck pCR(A). Der Funktionsblock 20A enthält folgende Funktionalitäten: die Überwachung des A-seitigen Rail-Drucksensors anhand des A-seitigen Raildrucks pCR(A), die Umschaltung in den A-seitigen Notbetrieb durch Setzen des Signals RD(A) und die Ausgabe eines Notbetriebsansteuersignals. Das Notbetriebsansteuersignal wird hierbei so gewählt, dass es zuverlässig zu einem Öffnen des passiven, hier: A-seitigen, Druckbegrenzungsventils (Fig. 1: 9A) kommt. Wird ein defekter A-seitiger Rail-Drucksensor erkannt, so wird der Notbetrieb gesetzt, indem in einem ersten Schritt das Signal RD(A) gesetzt wird und in einem zweiten Schritt als Notbetriebsansteuersignal der Notbetriebsstromwert iNB ausgegeben wird. Durch das Setzen des Signals RD(A) wechselt der Schalter SR1 in die Stellung 2, sodass nunmehr der Soll-Strom iSL(A) dem Notbetriebsstromwert iNB entspricht. Wird die A-seitige Saugdrossel -wie zuvor beschrieben- in negativer Logik angesteuert, so wird als Notbetriebsstromwert zum Beispiel iNB=0 A ausgegeben. Da nunmehr die A-seitige Saugdrossel vollständig geöffnet ist, erhöht sich der A-seitige Raildruck pCR(A) sukzessive bis das A-seitige Druckbegrenzungsventil anspricht. Öffnet das A-seitige Druckbegrenzungsventil, so stellt sich im A-seitigen Rail ein Raildruck pCR(A) ein, welcher vom Betriebspunkt der Brennkraftmaschine abhängig ist. Im Leerlauf zum Beispiel pCR(A)=900 bar und bei Volllast pCR(A)=700 bar. Im Mittel also ein Raildruck von 800 bar. Dieser mittlere Raildruck ist eine sehr gute Näherung für den Notbetrieb. Ein Öffnen des passiven A-seitigen Druckbegrenzungsventils kann aber auch dann hervorgerufen werden, wenn der Notbetriebsstromwert iNB auf einen etwas größeren Wert, zum Beispiel iNB=0.4 A, gesetzt wird. Dies hat den Vorteil, dass durch die größere Kraftstoff-Drosselung der Kraftstoff beim Absteuern in den Kraftstofftank weniger stark erwärmt wird.

Eine andere Möglichkeit um ein Öffnen des passiven A-seitigen Druckbegrenzungsventils im Notbetrieb auszulösen, besteht darin, dass als Notbetriebsansteuersignal anstelle des Notbetriebsstromwerts iNB ein PWM-Notbetriebswert PWMNB, zum Beispiel PWMNB=0%, als Vorgabewert für die PWM-Berechnung 16A gesetzt wird. Für dieses Beispiel wäre dann der Schalter SR1 innerhalb der PWM-Berechnung 16A angeordnet. Eine weitere Ausführungsform besteht darin, dass von der Pumpen-Kennlinie 15A auf eine Grenzkurve umgeschaltet wird. Bei dieser Ausführungsform wäre dann der über die Grenzkurve berechnet Strom iKL(A) das Notbetriebsansteuersignal. In der Figur 2 sind diese Varianten als gestrichelte Ausgangsgrößen des Funktionsblocks 20A dargestellt.

Die Figur 3 zeigt in einem Blockschaltbild den A-seitigen Raildruck-Regelkreis 11A mit Notbetriebsfunktion, den B-seitigen Raildruck-Regelkreis 11 B mit Notbetriebsfunktion, ein Kennfeld 21 zum Festlegen eines Soll-Raildrucks pSL, ein Injektorkennfeld 22 zur Berechnung der Bestromungsdauer BD, eine Berechnung 23 zum Bestimmen des Soll-Verbrauchs Wb und die Schalter SR2 bis SR7. Die Eingangsgrößen des Blockschaltbilds sind die Motordrehzahl nMOT, ein Soll-Moment TSL, der A-seitige Ist-Raildruck pIST(A), der B-seitige Ist-Raildruck pIST(B), der Raildruck-Mittelwert pM, die Signale RD(A) sowie RD(B), die Zündfolge ZF, ein Soll-Notbetriebsraildruck pNB(SL) und eine Soll-Einspritzmenge QSL. Die Einspritzmenge QSL entspricht bei einer drehzahlgeregelten Brennkraftmaschine der Stellgröße des Drehzahlreglers. Bei einer nichtdrehzahlgeregelten Brennkraftmaschine wird die Soll-Einspritzmenge aus dem Leistungswunsch, zum Beispiel der Fahrpedalstellung, abgeleitet. Die Ausgangsgrößen des Blockschaltbilds sind die Bestromungsdauer BD der Injektoren, die Rohwerte pCR(A) des A-seitigen Raildrucks und die Rohwerte pCR(B) des B-seitigen Raildrucks.

Im Normalbetrieb befinden sich die Schalter SR2 und SR3 in der Stellung 1, da das Signal RD(A)=0 ist. Damit entsprechen der A-seitige Soll-Raildruck pSL(A) und der B-seitige Soll-Raildruck pSL(B) dem Soll-Raildruck pSL. Der Soll-Raildruck pSL wiederum wird über das Kennfeld 21 in Abhängigkeit des Soll-Moments TSL und der Motordrehzahl nMOT berechnet. Im Normalbetrieb, das heißt, beide Rail-Drucksensoren sind fehlerfrei, befindet sich der Schalter SR7 ebenfalls in der Stellung 1. Der Druck pINJ wird daher über die Stellung des Schalters SR4 bestimmt. Befindet sich dieser in der Stellung 1, so ist der Druck pINJ identisch mit dem A-seitigen Ist-Raildruck pIST(A). In der Stellung 2 ist der Druck pINJ identisch mit dem B-seitigen Ist-Raildruck pIST(B). Die Stellung des Schalters SR4 wechselt in Abhängigkeit der Zündfolge ZF. Soll ein A-seitiger Injektor angesteuert werden, so ist der Schalter SR4 in der Stellung 1, sodass die Bestromungsdauer BD über das Injektorkennfeld 22 in Abhängigkeit der Soll-Einspritzmenge QSL und des A-seitigen Ist-Raildrucks pIST(A) berechnet wird. Die Umschaltung erfolgt hierbei so, dass zur Berechnung der Bestromungsdauer BD über das Injektorkennfeld 22 immer derjenige Ist-Raildruck verwendet wird, welcher zum aktuell angesteuerten Injektor korrespondiert.

Wird nun ein defekter A-seitiger Rail-Drucksensor erkannt, so wird in den A-seitigen Notbetrieb gewechselt, in welchem der A-seitige Raildruck gesteuert wird. Im A-seitigen Notbetrieb wird -wie zur Figur 2 beschrieben- der A-seitige Raildruck sukzessive bis zum Ansprechen des A-seitigen Druckbegrenzungsventils erhöht. Der B-seitige Raildruck wird hingegen weiterhin geregelt. Hierfür gibt es zwei Ausführungsformen. In der ersten Ausführungsform bleibt der Schalter SR3 in der Stellung 1, das heißt, der B-seitige Soll-Raildruck pSL(B) ist weiterhin identisch mit dem Soll-Raildruck pSL, welcher über das Kennfeld 21 berechnet wird. In diesem Fall wird das B-seitige Rail weiterhin mit dem optimalen Raildruck betrieben, mit dem Vorteil von gleichbleibenden Emissionen und einer hohen Motorleistung. In der zweiten Ausführungsform wird der B-seitige Soll-Raildruck pSL(B) auf den Wert eines Soll-Notbetriebsraildrucks pNB(SL), zum Beispiel pNB(SL)=1500 bar, gesetzt, indem der Schalter SR3 durch Setzen des Signals RD(A) in die Stellung 2 wechselt. Bei der zweiten Ausführungsform ist der Druckunterschied zwischen dem A-seitigen Ist-Raildruck pIST(A), zum Beispiel 700 bar, und dem B-seitigen Ist-Raildruck pIST(B) kleiner als bei der ersten Ausführungsform. Der geringere Druckunterschied bewirkt eine bessere Laufruhe im Notbetrieb. Fällt der B-seitige Rail-Drucksensor aus, so ist die Vorgehensweise analog zur Vorgehensweise bei Ausfall des A-seitigen Rail-Drucksensors. Die B-seitige Raildruck-Regelung wird deaktiviert und es wird in den gesteuerten B-seitigen Notbetrieb übergegangen, während der A-seitige Raildruck weiterhin geregelt wird. Der A-seitige Soll-Raildruck pSL(A) entspricht dann entweder dem Soll-Raildruck pSL in der ersten Ausführungsform (SR2=1) oder dem Soll-Notbetriebsraildruck pNB(SL) in der zweiten Ausführungsform (SR2=2).

Die Ermittlung des Drucks pINJ im Falle eines Notbetriebs ist durch die Schalterstellungen 2 bis 4 des Schalters SR7 charakterisiert. Ist der B-seitige Rail-Drucksensor defekt, so wird das Signal RD(B) gesetzt, wodurch der Schalter SR7 die Stellung 2 einnimmt. In diesem Fall entspricht der Druck pINJ dem A-seitigen Ist-Raildruck pIST(A) in der Schalterstellung SR5=1 oder dem Raildruck-Mittelwert pM in der Schalterstellung SR5=2. Der Raildruck-Mittelwert wird zum Beispiel auf pM=800 bar festgesetzt. Die Umschaltung des Schalters SR5 erfolgt auch hier in Abhängigkeit der Zündfolge ZF. Ist der A-seitige Rail-Drucksensor defekt, so wird das Signal RD(A) gesetzt, wodurch der Schalter SR7 die Stellung 3 einnimmt. In diesem Fall wird der Druck pINJ ermittelt, indem vom mittleren Druck pM auf den B-seitigen Ist-Raildruck pIST(B) in Abhängigkeit der Zündfolge ZF umgeschaltet wird. Sind beide Rail-Drucksensoren defekt, so werden beide Signale RD(A) und RD(B) gesetzt, wodurch der Schalter SR7 die Stellung 4 einnimmt. In diesem Fall werden nun die nicht mehr messbaren Ist-Raildrücke durch den mittleren Raildruck pM=800 bar unabhängig von der Zündfolge ersetzt, wodurch ein Weiterbetrieb der Brennkraftmaschine mit geringerer Leistungsabgabe ermöglicht wird.

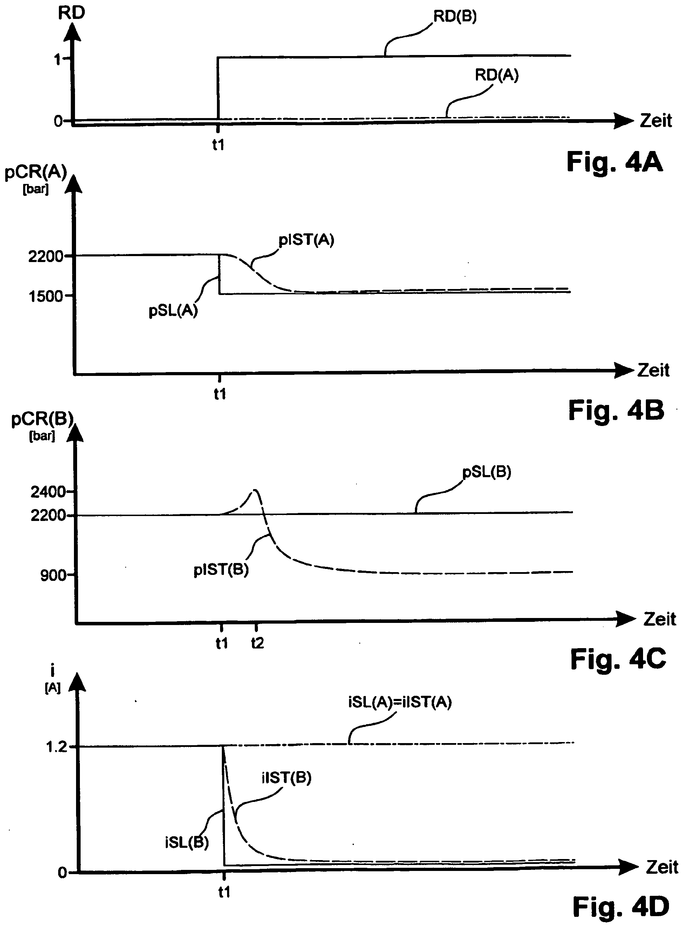

Die Figur 4 zeigt ein Zeitdiagramm. Die Figur 4 besteht aus den Teildiagrammen 4A bis 4D. In der Figur 4A ist als durchgezogene Linie das Signal RD(B) und als strichpunktierte Linie das Signal RD(A) eingezeichnet. Das Signal RD(A) wird bei einem defekten A-seitigen Rail-Drucksensor bzw. das Signal RD(B) bei einem defekten B-seitigen Rail-Drucksensor gesetzt. Die Figur 4B zeigt den A-seitigen Soll-Raildruck pSL(A) als durchgezogene Linie und den A-seitigen Ist-Raildruck pIST(A) als gestrichelte Linie. Die Figur 4C zeigt den B-seitigen Soll-Raildruck pSL(B) als durchgezogene Linie und den B-seitigen Ist-Raildruck pIST(B) als gestrichelte Linie. Die Figur 4D zeigt den A-seitigen Soll-Strom iSL(A) als strichpunktierte Linie, den B-seitigen Soll-Strom iSL(B) als durchgezogene Linie und den B-seitigen Ist-Strom iIST(B) als gestrichelte Linie. Dem dargestellten Beispiel wurde diejenige Ausführungsform zugrunde gelegt, bei der mit Setzen des Notbetriebs der Sollwert für das intakte Rail auf den Soll-Notbetriebsraildruck pNB(SL) gesetzt wird. Dies ist die zweite Ausführungsform wie in Figur 3 beschrieben.

Zum Zeitpunkt t1 fällt der B-seitige Rail-Drucksensor aus, das heißt, das Signal RD(B) wird auf den Wert RD(B)=1 gesetzt. Der A-seitige Rail-Drucksensor arbeitet hingegen fehlerfrei, das heißt, das Signal RD(A) verbleibt bei RD(A)=0. Mit Setzen des Notbetriebs zum Zeitpunkt t1 wird, siehe Figur 4B, der A-seitige Sollwert pSL(A)=2200 bar auf den Soll-Notbetriebsraildruck pNB(SL)=1500 bar umgeschaltet, indem der Schalter SR2=2 gesetzt wird (Figur 3). Aufgrund des neuen Sollwerts fällt der A-seitige Ist-Raildruck pIST(A) vom Zeitpunkt t1 an und nähert sich dem A-seitigen Soll-Raildruck pSL(A) aperiodisch. Der B-seitige Soll-Raildruck pSL(B), siehe Figur 4C, entspricht dem über das Kennfeld berechneten Soll-Raildruck pSL (Fig. 3: 21), welcher auch nach dem Zeitpunkt t1 unverändert bei pSL(B)=2200 bar verbleibt. Mit Setzen des Notbetriebs zum Zeitpunkt t1 wird der B-seitige Soll-Strom iSL(B) auf den Wert des Notbetriebsstromwerts iNB=0 A gesetzt, indem der Schalter SR1 in Figur 2 in die Stellung SR1=2 wechselt. Diesem Sollwertsprung folgt der B-seitige Ist-Strom iIST(B) zeitverzögert, wobei dessen Verlauf sich aus der in der Saugdrosselspule gespeicherten Energie ergibt. Da die Saugdrossel stromlos vollständig geöffnet ist, erhöht sich nach dem Zeitpunkt t1 der B-seitige Ist-Raildruck pIST(B) sukzessive. Zum Zeitpunkt t2 öffnet das passive Druckbegrenzungsventil, da der B-seitige Ist-Raildruck pIST(B)=2400 bar übersteigt. Über das geöffnete Druckbegrenzungsventil wird Kraftstoff aus dem B-seitigen Rail in den Kraftstofftank abgesteuert, sodass der B-seitige Ist-Raildruck auf etwa pIST(B)=900 bar abfällt. Da der A-seitige Raildruck nach Ausfall des B-seitigen Rail-Drucksensors weiterhin geregelt wird, sind der A-seitige Soll-Strom iSL(A) und der A-seitige Ist-Strom iIST(A) identisch, siehe Figur 4D.

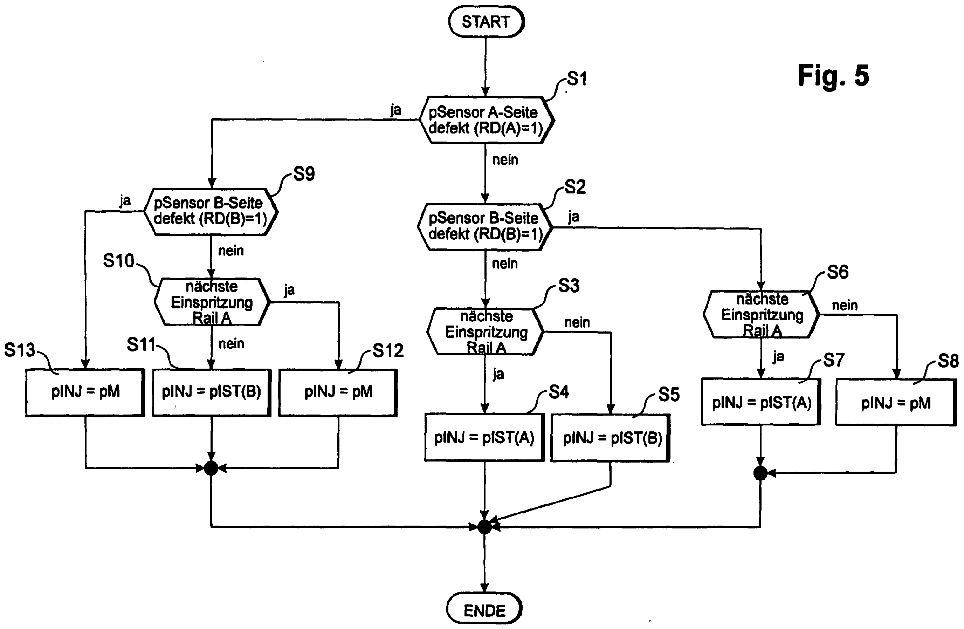

In der Figur 5 ist ein erster Programm-Ablaufplan zur Festlegung des Drucks pINJ dargestellt. Der Druck pINJ ist eine Eingangsgröße des Injektorkennfelds (Fig. 3: 22) zur Bestimmung der Bestromungsdauer, mit welcher die Injektoren angesteuert werden. Bei S1 wird geprüft, ob der A-seitige Rail-Drucksensor defekt ist, das heißt, ob das Signal RD(A)=1 gesetzt ist. Ist der A-seitige Raildrucksensor fehlerfrei, so wird der Programmteil mit S2 bis S8 durchlaufen, anderenfalls der Programmteil mit S9 bis S13. Wurde bei S1 festgestellt, dass der A-seitige Rail-Drucksensor nicht defekt ist, Abfrageergebnis S1: nein, so wird bei S2 die Fehlerfreiheit des B-seitigen Rail-Drucksensors abgefragt. Ist der B-seitige Rail-Drucksensor ebenfalls nicht defekt, Abfrageergebnis S2: nein, so wird bei S3 abgefragt, ob die nächste Einspritzung auf der A-Seite erfolgt. Ist dies der Fall, Abfrageergebnis S3: ja, so entspricht der Druck pINJ dem A-seitigen Ist-Raildruck pIST(A), S4. Soll hingegen die nächste Einspritzung auf der B-Seite erfolgen, Abfrageergebnis S3: nein, so entspricht der Druck pINJ dem B-seitigen Ist-Raildruck pIST(B), S5. Danach ist dieser Programmteil beendet. Wurde bei S2 festgestellt, dass der B-seitige Rail-Drucksensor defekt ist, Abfrageergebnis S2: ja, so wird bei S6 abgefragt, ob die nächste Einspritzung auf der A-Seite erfolgt. Ist dies der Fall, Abfrageergebnis S6: ja, so entspricht der Druck pINJ dem A-seitigen Ist-Raildruck pIST(A), S7. Soll hingegen die nächste Einspritzung auf der B-Seite erfolgen, so wird bei S8 der Druck pINJ auf den Raildruck-Mittelwert pM, zum Beispiel pM=800 bar, gesetzt. Danach ist dieser Programmteil beendet.

Wurde bei S1 ein defekter A-seitiger Rail-Drucksensor festgestellt, Abfrageergebnis S1: ja, so wird bei S9 geprüft, ob der B-seitige Rail-Drucksensor defekt ist. Ist dies nicht der Fall, Abfrageergebnis S9: nein, so wird bei S10 abgefragt, ob die nächste Einspritzung auf der A-Seite erfolgt. Ist dies nicht der Fall, das heißt, die nächste Einspritzung erfolgt auf der B-Seite, so wird bei S11 der Druck pINJ auf den Wert des B-seitigen Ist-Raildrucks pIST(B) gesetzt. Ist hingegen die nächste Einspritzung auf der A-Seite, Abfrageergebnis S10: ja, so wird bei S12 der Druck pINJ auf den Raildruck-Mittelwert pM gesetzt, da ja der A-seitige Rail-Drucksensor defekt ist. Wurde bei S9 festgestellt, dass auch der B-seitige Rail-Drucksensor defekt ist, Abfrageergebnis S9: ja, so liegt ein Doppelfehler vor. In diesem Fall wird bei S13 der Druck pINJ generell, also unabhängig von der Zündfolge, auf den Raildruck-Mittelwert pM gesetzt. Danach ist dieser Programmteil beendet.

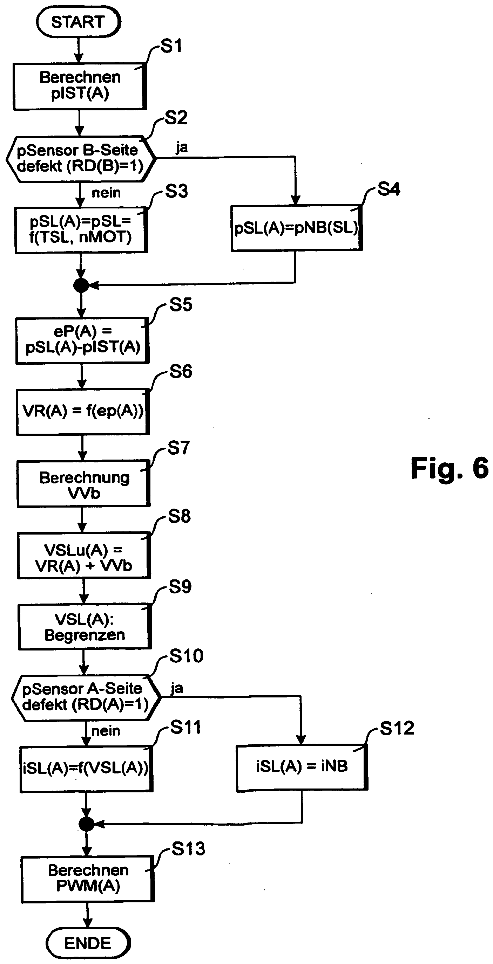

Die Figur 6 zeigt einen zweiten Programm-Ablaufplan. Bei S1 wird der A-seitige Ist-Raildruck pIST(A) aus den A-seitigen Rohwerten pCR(A) berechnet. Danach wird bei S2 abgefragt, ob ein defekter B-seitiger Rail-Drucksensor erkannt wurde. Ist dies nicht der Fall, Abfrageergebnis S2: nein, so wird bei S3 der A-seitige Soll-Raildruck pSL(A) auf den Wert des Soll-Raildrucks pSL gesetzt, welcher wiederum über ein Kennfeld (Fig. 3: 21) in Abhängigkeit eines Soll-Moments TSL und der Motordrehzahl nMOT berechnet wird. Wurde hingegen bei S2 ein defekter B-seitiger Rail-Drucksensor erkannt, Abfrageergebnis S2: ja, so wird bei S4 der A-seitige Soll-Raildruck pSL(A) auf den Soll-Notbetriebsraildruck pNB(SL), zum Beispiel pNB(SL)=1500 bar, gesetzt (SR2=2). Danach wird bei S5 die A-seitige Regelabweichung ep(A) aus der Abweichung von A-seitigem Ist-Raildruck pIST(A) zu A-seitigem Soll-Raildruck pSL(A) berechnet. Aus der A-seitigen Regelabweichung ep(A) bestimmt bei S6 der A-seitige Druckregler, beispielsweise über einen PIDT1-Algorithmus, als Stellgröße den A-seitigen Reglervolumenstrom VR(A). Bei S7 wird der Soll-Verbrauch VVB anhand der Soll-Einspritzmenge QSL und der Motordrehzahl nMOT berechnet. Danach wird dieser bei S8 mit dem A-seitigen Reglervolumenstrom VR(A) addiert. Das Ergebnis entspricht dem unbegrenzten A-seitigen Soll-Volumenstrom VSLu(A), welcher dann bei S9 in Abhängigkeit der Motordrehzahl begrenzt wird. Das Ergebnis entspricht dem A-seitigen Soll-Volumenstrom VSL(A). Im Anschluss daran wird bei S10 geprüft, ob der A-seitige Rail-Drucksensor defekt ist. Ist dies nicht der Fall, so wird bei S11 über die Pumpen-Kennlinie der A-seitige Soll-Strom iSL(A) aus dem A-seitigen Soll-Volumenstrom VSL(A) bestimmt. Ist hingegen der A-seitige Rail-Drucksensor defekt, Abfrageergebnis S10: ja, so wird bei S12 der A-seitige Soll-Strom iSL(A) auf den Notbetriebsstromwert iNB gesetzt (SR1=2). Bei S13 wird anhand des A-seitigen Soll-Stroms iSL(A) dann das A-seitige PWM-Signal PWM(A) berechnet. Danach ist der Programmdurchlauf beendet.

### Bezugszeichen

- 1: Brennkraftmaschine
- 2: Kraftstofftank
- 3A, B: Niederdruckpumpe
- 4A, B: Saugdrossel
- 5A, B: Hochdruckpumpe
- 6A, B: Rail
- 7A, B: Injektor
- 8A, B: Rail-Drucksensor
- 9A, B: Druckbegrenzungsventil, passiv
- 10: elektronisches Steuergerät (ECU)
- 11A, B: Raildruck-Regelkreis (mit Notbetriebsfunktion)
- 12A, B: Filter
- 13A, B: Druckregler
- 14A, B: Begrenzung
- 15A, B: Pumpen-Kennlinie
- 16A, B: Berechnung PWM-Signal
- 17A, B: Einheit (Saugdrossel mit Hochdruckpumpe)
- 18A, B: Strom-Regelkreis
- 19A, B: Filter
- 20A, B: Funktionsblock Notbetrieb
- 21: Kennfeld Soll-Raildruck
- 22: Injektorkennfeld
- 23: Berechnung Soll-Verbrauch

## Patentansprüche

1. Verfahren zur Steuerung und Regelung einer Brennkraftmaschine (1) mit einem A-seitigen und einem B-seitigen Common-Railsystem, bei dem der Raildruck (pCR(A)) des Common-Railsystems auf der A-Seite über einen A-seitigen Raildruck-Regelkreis (11A) und der Raildruck (pCR(B)) des Common-Railsystems auf der B-Seite über einen B-seitigen Raildruck-Regelkreis (11 B) jeweils unabhängig voneinander geregelt werden,
**dadurch gekennzeichnet,**
**dass** mit Erkennen eines defekten A-seitigen Rail-Drucksensors (8A) in einen A-seitigen Notbetrieb gewechselt wird, bei dem der A-seitige Raildruck (pCR(A)) gesteuert wird sowie der B-seitige Raildruck (pCR(B)) auf einen Soll-Notbetriebsraildruck pNB(SL) geregelt wird, oder
mit Erkennen eines defekten B-seitigen Rail-Drucksensors (8B) in einen B-seitigen Notbetrieb gewechselt wird, bei dem der B-seitige Raildruck (pCR(B)) gesteuert wird und der A-seitige Raildruck (pCR(A)) auf einen Soll-Notbetriebsraildruck pNB(SL) geregelt wird.

2. Verfahren nach Anspruch 1,
**dadurch gekennzeichnet,**
**dass** mit Erkennen eines defekten A-seitigen Rail-Drucksensors (8A) und eines defekten B-seitigen Rail-Drucksensors (8B) in den A-seitigen und den B-seitigen Notbetrieb gewechselt wird.

3. Verfahren nach einem der vorausgegangenen Ansprüche,
**dadurch gekennzeichnet,**
**dass** im A-seitigen Notbetrieb der A-seitige Raildruck (pCR(A)) sukzessive bis zum Ansprechen eines A-seitigen passiven Druckbegrenzungsventils (9A) erhöht wird und im B-seitigen Notbetrieb der B-seitige Raildruck (pCR(B)) sukzessive bis zum Ansprechen eines B-seitigen passiven Druckbegrenzungsventils (9B) erhöht wird, wobei im geöffneten Zustand des passiven Druckbegrenzungsventils (9A, 9B) Kraftstoff aus dem jeweiligen Rail (6A, 6B) in den Kraftstofftank (2) abgesteuert wird.

4. Verfahren nach Anspruch 3,
**dadurch gekennzeichnet,**
**dass** im Notbetrieb der Raildruck (pCR(A), pCR(B)) erhöht wird, indem eine niederdruckseitige Saugdrossel (4A, 4B) als Druckstellglied in Öffnungsrichtung beaufschlagt wird.

5. Verfahren nach Anspruch 4,
**dadurch gekennzeichnet,**
**dass** ein Soll-Strom (iSL(A), iSL(B)) als Ansteuersignal der Saugdrossel (4A, 4B) auf einen Notbetriebsstromwert (iNB) gesetzt wird.

6. Verfahren nach Anspruch 4,
**dadurch gekennzeichnet,**
**dass** ein PWM-Signal (PWM(A), PWM(B)) als Ansteuersignal der Saugdrossel (4A, 4B) auf einen PWM-Notbetriebswert (PMWNB) gesetzt wird.

7. Verfahren nach Anspruch 4,
**dadurch gekennzeichnet,**
**dass** im Normalbetrieb der Soll-Strom (iSL(A), iSL(B)) als Ansteuersignal der Saugdrossel (4A, 4B) über eine Pumpen-Kennlinie (15A, 15B) und im Notbetrieb der Soll-Strom (iSL(A), iSL(B)) über eine Grenzkurve (GK) bestimmt wird.

8. Verfahren nach einem der vorausgegangenen Ansprüche,
**dadurch gekennzeichnet,**
**dass** im Normalbetrieb vom A-seitigen Ist-Raildruck (pIST(A)) in Abhängigkeit der Zündfolge (ZF) auf den B-seitigen Ist-Raildruck (pIST(B)) als Eingangsgröße eines Injektorkennfelds (22) zur Berechnung einer Bestromungsdauer (BD) des Injektors (7A, 7B) umgeschaltet wird und im A-seitigen Notbetrieb anstelle des A-seitigen Ist-Raildrucks (pIST(A)) ein Raildruck-Mittelwert (pM) als Eingangsgröße gesetzt wird oder im B-seitigen Notbetrieb anstelle des B-seitigen Ist-Raildrucks (pIST(B)) der Raildruck-Mittelwert (pM) als Eingangsgröße gesetzt wird.

9. Verfahren nach Anspruch 8,
**dadurch gekennzeichnet,**
**dass** bei gleichzeitigem A-seitigen und B-seitigen Notbetrieb der Raildruck-Mittelwert (pM) als Eingangsgröße des Injektorkennfelds (22) unabhängig von der Zündfolge (ZF) gesetzt wird.

## Claims

1. Method for the open-loop and closed-loop control of an internal combustion engine (1) with an A-side and B-side common rail system, in which method the rail pressure (pCR(A)) of the common rail system on the A side is closed-loop controlled via an A-side rail pressure control loop (11A), and the rail pressure (pCR(B)) of the common rail system on the B side is closed-loop controlled via a B-side rail pressure control loop (11B), each independently of one another,
**characterized**
**in that** when a defective A-side rail pressure sensor (8A) is detected there is a change into an A-side emergency operating mode in which the A-side rail pressure (pCR(A)) is open-loop controlled and the B-side rail pressure (pCR(B)) is closed-loop controlled to a setpoint emergency operating mode rail pressure pNB(SL), or
when a defective B-side rail pressure sensor (8B) is detected there is a change into a B-side emergency operating mode in which the B-side rail pressure (pCR(B)) is open-loop controlled and the A-side rail pressure (pCR(A)) is closed-loop controlled to a setpoint emergency operating mode rail pressure pNB(SL).

2. Method according to Claim 1,
**characterized**
**in that** when a defective A-side rail pressure sensor (8A) and a defective B-side rail pressure sensor (8B) are detected there is a change to the A-side emergency operating mode and the B-side emergency operating mode.

3. Method according to one of the preceding claims,
**characterized**
**in that** in the A-side emergency operating mode the A-side rail pressure (pCR(A)) is increased successively until an A-side passive pressure-limiting valve (9A) responds, and in the B-side emergency operating mode the B-side rail pressure (pCR(B)) is increased successively until a B-side passive pressure-limiting valve (9B) responds, wherein in the opened state of the passive pressure-limiting valve (9A, 9B) fuel is discharged into the fuel tank (2) from the respective rail (6A, 6B).

4. Method according to Claim 3,
**characterized**
**in that** in the emergency operating mode the rail pressure (pCR(A), pCR(B)) is increased by acting, in the opening direction, on a low-pressure-side intake restrictor (4A, 4B) as a pressure-actuating element.

5. Method according to Claim 4,
**characterized**
**in that** a setpoint current (iSL(A), iSL(B)) is set as an actuation signal of the intake restrictor (4A, 4B) to an emergency operating mode current value (iNB).

6. Method according to Claim 4,
**characterized**
**in that** a PWM signal (PWM(A), PWM(B)) is set as an actuation signal of the intake restrictor (4A, 4B) to a PWM emergency operating mode (PWMNB).

7. Method according to Claim 4,
**characterized**
**in that** in the normal operating mode the setpoint current (iSL(A), iSL(B)) is determined as an actuation signal of the intake restrictor (4A, 4B) by means of a pump characteristic curve (15A, 15B), and in the emergency operating mode the setpoint current (iSL(A), iSL(B)) is determined by means of a limiting curve (GK).

8. Method according to one of the preceding claims,
**characterized**
**in that** in the normal operating mode switching over is carried out from the A side actual rail pressure (pIST(A)), as a function of the ignition sequence (ZF), to the B-side actual rail pressure (pIST(B)) as an input variable of an injector characteristic diagram (22) for the calculation of an energization period (BD) of the injector (7A, 7B), and in the A-side emergency operating mode, instead of the A-side actual rail pressure (pIST(A)), a rail pressure mean value (pM) is set as an input variable, or in the B-side emergency operating mode, instead of the B-side actual rail pressure (pIST(B)), the rail pressure mean value (pM) is set as an input variable.

9. Method according to Claim 8,
**characterized**
**in that** in the case of simultaneous A-side emergency operating mode and B-side emergency operating mode the rail pressure mean value (pM) is set as an input variable of the injector characteristic diagram (22) independently of the ignition sequence (ZF).

## Revendications

1. Procédé de commande et de régulation d'un moteur à combustion interne (1) comprenant un système à rampe commune côté A et côté B, dans lequel la pression de la rampe (pCR(A)) du système à rampe commune sur le côté A est régulée par le biais d'un circuit (11A) de réglage de pression de rampe côté A, et la pression de la rampe (pCR(B)) du système à rampe commune sur le côté B est régulée par le biais d'un circuit (11B) de réglage de pression de rampe côté B, à chaque fois indépendamment l'une de l'autre,
**caractérisé en ce que**
lorsqu'un capteur de pression de rampe côté A (8A) est détecté comme étant défectueux, il est effectué une commutation à un fonctionnement de secours côté A, dans lequel la pression de rampe côté A (pCR(A)) est commandée et la pression de rampe côté B (pCR(B)) est régulée à une pression de rampe de fonctionnement de secours de consigne pNB(SL), ou
lorsqu'un capteur de pression de rampe côté B (8B) est détecté comme étant défectueux, il est effectué une commutation à un fonctionnement de secours côté B, dans lequel la pression de rampe côté B (pCR(B)) est commandée et la pression de rampe côté A (pCR(A)) est régulée à une pression de rampe de fonctionnement de secours de consigne pNB(SL).

2. Procédé selon la revendication 1,
**caractérisé en ce que**
lorsqu'un capteur de pression de rampe côté A (8A) est détecté comme étant défectueux et qu'un capteur de pression de rampe côté B (8B) est détecté comme étant défectueux, il est effectué une commutation à un fonctionnement de secours côté A et côté B.

3. Procédé selon l'une quelconque des revendications précédentes,
**caractérisé en ce que**
dans le fonctionnement de secours côté A, la pression de rampe côté A (pCR(A)) est augmentée successivement jusqu'à réaction d'une soupape de limitation de pression passive côté A (9A), et dans le fonctionnement de secours côté B, la pression de rampe côté B (pCR(B)) est augmentée successivement jusqu'à réaction d'une soupape de limitation de pression passive côté B (9B), et dans l'état ouvert de la soupape de limitation de pression passive (9A, 9B), du carburant étant commandé hors de la rampe respective (6A, 6B) dans le réservoir de carburant (2).

4. Procédé selon la revendication 3,
**caractérisé en ce que**
dans le fonctionnement de secours, la pression de rampe (pCR(A), pCR(B)) est augmentée par sollicitation dans le sens de l'ouverture d'un papillon d'étranglement d'aspiration côté basse pression (4A, 4B) en tant qu'organe de commande de pression.

5. Procédé selon la revendication 4,
**caractérisé en ce**
**qu'**un courant de consigne (iSL(A), iSL(B)) en tant que signal pilote du papillon d'étranglement d'aspiration (4A, 4B) est réglé à une valeur de courant de fonctionnement de secours (iNB).

6. Procédé selon la revendication 4,
**caractérisé en ce**
**qu'**un signal PWM (PWM(A), PWM(B)) en tant que signal pilote du papillon d'étranglement d'aspiration (4A, 4B) est réglé à une valeur de fonctionnement de secours PWM (PMWNB).

7. Procédé selon la revendication 4,
**caractérisé en ce que**
pendant le fonctionnement normal, le courant de consigne (iSL(A), iSL(B)) en tant que signal pilote du papillon d'étranglement d'aspiration (4A, 4B) est déterminé par le biais d'une caractéristique de pompe (15A, 15B), et en fonctionnement de secours, le courant de consigne (iSL(A), iSL(B)) est déterminé par le biais d'une courbe de limitation (GK).

8. Procédé selon l'une quelconque des revendications précédentes,
**caractérisé en ce que**
pendant le fonctionnement normal, il est effectué une commutation de la pression de rampe réelle côté A (pIST(A)) en fonction de la séquence d'allumage (ZF) à la pression de rampe réelle côté B (pIST(B)) en tant que grandeur d'entrée d'un champ caractéristique d'injecteur (22) pour calculer une durée d'alimentation en courant (BD) de l'injecteur (7A, 7B) et en fonctionnement de secours côté A, au lieu de la pression de rampe réelle côté A (pIST(A)), on règle une valeur moyenne de pression de rampe (pM) en tant que grandeur d'entrée ou, en mode de secours côté B, au lieu de la pression de rampe réelle côté B (pIST(B)), on règle la valeur moyenne de pression de rampe (pM) en tant que grandeur d'entrée.

9. Procédé selon la revendication 8,
**caractérisé en ce**
**qu'**en cas de fonctionnement de secours simultané côté A et côté B, la valeur moyenne de pression de rampe (pM) est réglée en tant que grandeur d'entrée du champ caractéristique d'injecteur (22) indépendamment de la séquence d'allumage (ZF).
